# EUROPEAN PATENT SPECIFICATION

(11) **EP 3 970 994 B1**
(45) Date of publication and mention of the grant of the patent: **22.05.2024**
(21) Application number: 21197499.3
(22) Date of filing: 17.09.2021
(51) Int. Cl.: B60C 11/04, B60C 11/13, B60C 11/12, B60C 11/03

(54) **TIRE TREAD AND TIRE WITH SUCH A TREAD**
REIFENLAUFFLÄCHE UND REIFEN MIT EINER SOLCHEN LAUFFLÄCHE
BANDE DE ROULEMENT DE PNEU ET PNEU COMPRENANT UNE TELLE BANDE

(30) Priority: 22.09.2020 US 202017027741
(43) Date of publication of application: 23.03.2022
(73) Proprietor: The Goodyear Tire & Rubber Company, Akron, OH 44316 (US)
(72) Inventor: PASSANTE SPACCAPIETRA, Ettore, L-9070 Ettelbruck (LU); MULLER, Philippe Joseph Auguste, B-6971 Champlon (BE); BORTOLET, Lionel Jean-Marie, F-54730 Gorcy (FR); COCCON, Marco Nicolo, L-2230 Luxembourg (LU); NAWALE, Vaibhav, L-8710 Boevange-sur-Attert (LU)
(74) Representative: Kutsch, Bernd

(56) References cited:
- EP-A1- 2 722 199
- GB-A- 2 038 729
- US-A1- 2016 272 012

## Description

### Field of Invention

The present invention relates to a tire, and more specifically, to a tread for a tire.

### Background of the Invention

A construction may be adopted in conventional tires in which, when a cross-section is viewed from a tire meridian direction, a contact patch of a shoulder rib arches and forms a convex on an inner side of a tire radial direction. Due to this construction, contact pressure of the tire may be distributed evenly over a center region and a shoulder region of a tread portion and uneven wear of the tire may be suppressed.

A tread comprising a stabilizing structure is disclosed in US 2019/0168546.

A tread in accordance with the preamble of claim 1 is described in US 2016/0272012 A1.

GB 20 328 729 A1 discloses a tread having a groove with a slit at the bottom of the groove, the slit being axially offset from the center of the groove.

EP 2 722 199 A1 describes a tread having a groove with a slit at the bottom of the groove and with a circumferentially extending structure radially inside of the groove and being connected to the groove via the slit.

### Summary of the Invention

The invention relates to a tread in accordance with claim 1 and to a tire in accordance with claim 13.

Dependent claims refer o preferred embodiments of the invention.

A tread for a tire in accordance with a preferred aspect of the present invention includes a first circumferential main groove; a second circumferential main groove; a third circumferential main groove; and a fourth circumferential main groove. The fourth circumferential main groove has a stabilizing structure for increasing tread stiffness. The stabilizing structure is axially offset a predetermined amount from a centerline of the fourth circumferential main groove. The fourth circumferential main groove has an angled axially inner sidewall, an angled axially outer sidewall, and a curved base surface. The stabilizing structure extends radially inward from the curved base surface of the fourth circumferential main groove.

According to another a preferred aspect of the invention, the stabilizing structure has a subgroove with a curved, cylindrical radially innermost surface for mitigating cracking and increasing axial flexibility of the stabilizing structures.

According to still another preferred aspect of the invention, an axial width of the subgroove shrinks to 0.0 mm under a predetermined operating condition.

According to yet another preferred aspect of the invention, the subgroove has a first sidewall and a second sidewall interconnected by the curved, cylindrical radially innermost surface of the subgroove.

According to still another preferred aspect of the invention, the first sidewall abuts the second sidewall under the predetermined operating condition.

According to yet another preferred aspect of the invention, relative motion between the first sidewall and the second sidewall is prevented by a frictional engagement of the first sidewall and the second sidewall.

According to yet another preferred aspect of the invention, the radially innermost bottom of the first main groove has a radius of curvature ranging from 40.0 mm at an axially inner edge and 20.0 mm at an axially outer edge.

According to yet another preferred aspect of the invention, the radially innermost bottom of the first main groove has a radius of curvature as low as between 1.5 mm and 4.0 mm.

Also, a method not covered by the claimed invention for stiffening a tire tread is disclosed comprising the steps of:
extending a first circumferential main groove across the tire tread; extending a second circumferential main groove across the tire tread; circumferentially extending a subgroove across a radially innermost curved bottom surface of the first main groove; axially offsetting the subgroove a predetermined amount from a centerline of the first main groove; and curving a radially innermost surface of the subgroove, the radially innermost surface of the subgroove being radially inside the radially innermost curved bottom surface of the first main groove.

### Definitions

"Annular" means formed like a ring.

"Asymmetric tread" means a tread that has a tread pattern not symmetrical about the centerplane or equatorial plane EP of the tire.

"Axial" and "axially" are used herein to refer to lines or directions that are parallel to the axis of rotation of the tire.

"Circumferential" means lines or directions extending along the perimeter of the surface of the annular tire parallel to the Equatorial Plane (EP) and perpendicular to the axial direction.

"Equatorial plane (EP)" means the plane perpendicular to the tire's axis of rotation and passing through the center of its tread; or the plane containing the circumferential centerline of the tread.

"Groove" means an elongated void area in a tread that may extend circumferentially or laterally about the tread in a straight, curved, or zigzag manner.

Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"Inner" means toward the inside of the tire and "outer" means toward its exterior.

"Inboard side" means the side of the tire nearest the vehicle when the tire is mounted on a wheel and the wheel is mounted on the vehicle.

"Lateral" means an axial direction.

"Non-directional tread" means a tread that has no preferred direction of forward travel and is not required to be positioned on a vehicle in a specific wheel position or positions to ensure that the tread pattern is aligned with the preferred direction of travel. Conversely, a directional tread pattern has a preferred direction of travel requiring specific wheel positioning.

"Outboard side" means the side of the tire farthest away from the vehicle when the tire is mounted on a wheel and the wheel is mounted on the vehicle.

"Radial" and "radially" are used to mean directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Sipe" or "incision" means small slots molded into the tread elements of the tire that subdivide the tread surface and improve traction; sipes may be designed to close when within the contact patch or footprint, as distinguished from grooves.

"Tread" means a molded rubber component which, when bonded to a tire casing, includes that portion of the tire that comes into contact with the road when the tire is normally inflated and under normal load.

"Tread element" or "traction element" means a rib or a block element.

"Tread width" means the arc length of the tread surface in a plane including the axis of rotation of the tire.

### Brief Description of the Drawings

The present invention will be better understood through reference to the following description and the appended drawings, in which:
FIG. 1 is a schematic perspective view of a tire in accordance with the present invention;
FIG. 2 is a schematic orthogonal view of the tread of the tire of FIG. 1;
FIG. 3 is a schematic detail view of the tread of FIG. 2;
FIG. 4 is a schematic section view taken along the line "4-4" in FIG. 2;
FIG. 5 is a detailed schematic view of part of the tread of FIG. 4;
FIG. 6 represents a schematic detail perspective view of an asymmetric tread groove from FIG. 4; and
FIG. 7 represents a schematic detail perspective view of another asymmetric tread groove from FIG. 4.

### Detailed Description of Example Embodiments of the Present Invention

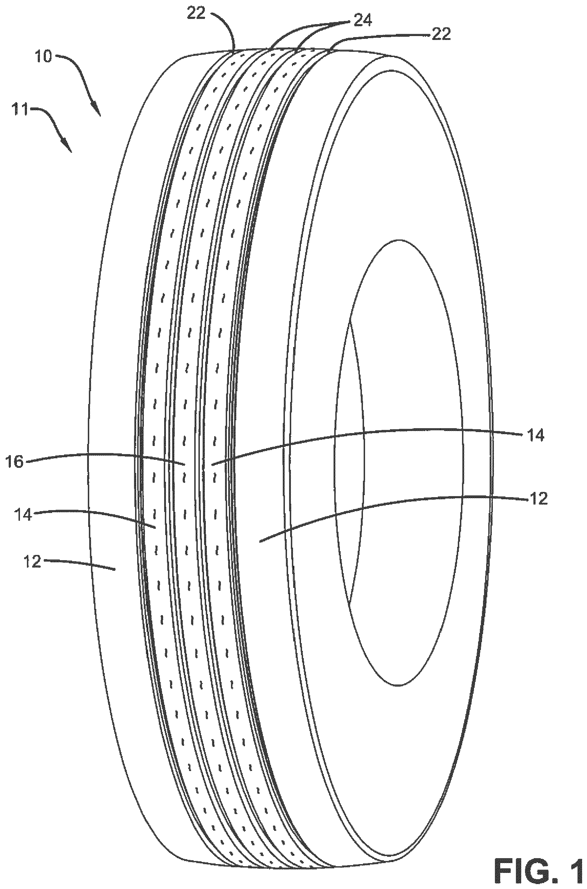

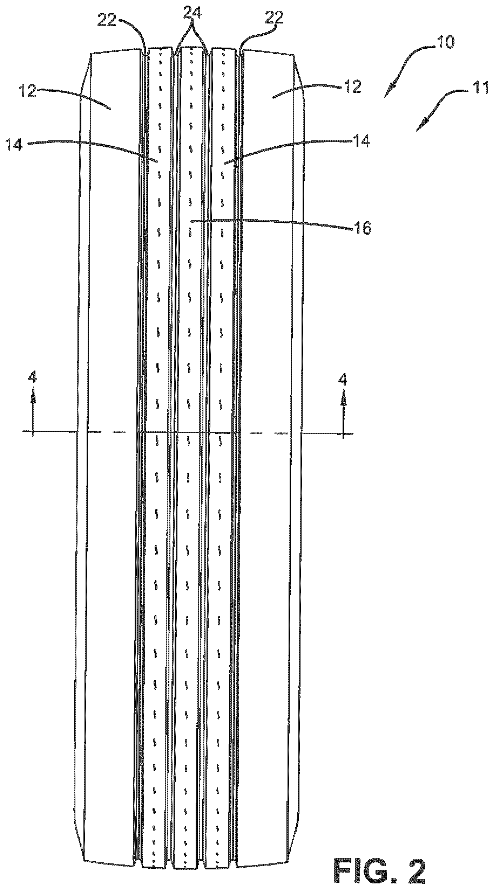

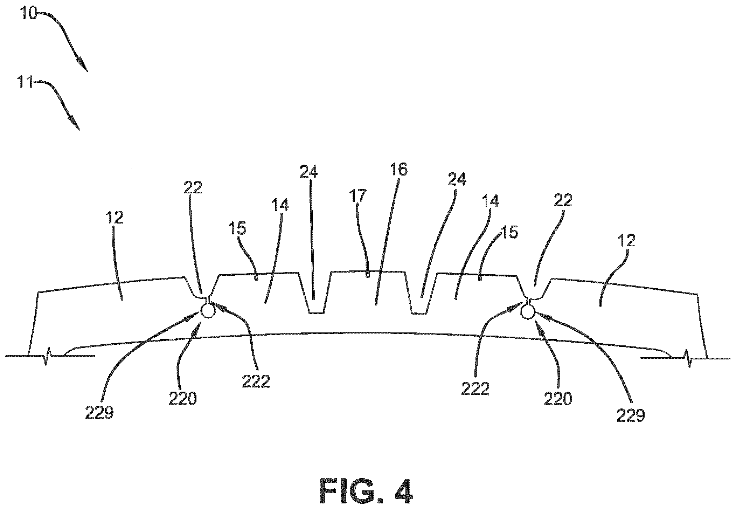

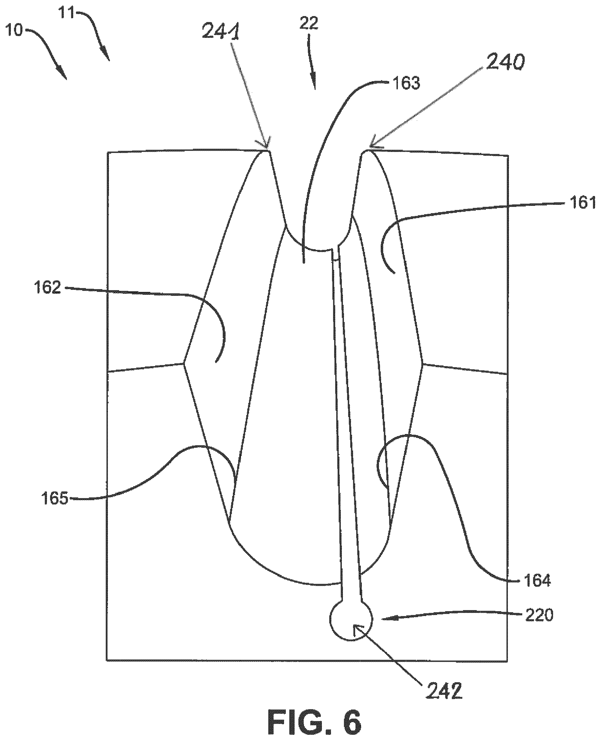

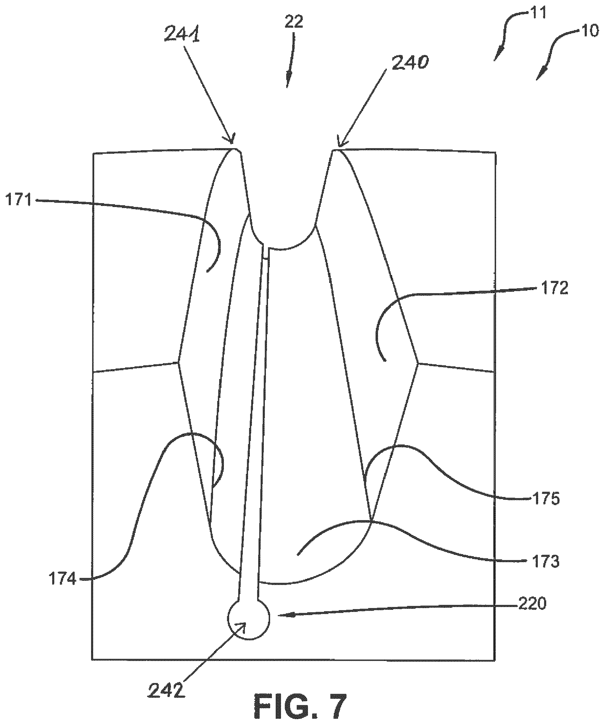

Referring now to the drawings, the present invention will below be described in more detail. The pneumatic, or non-pneumatic, tire 10 in accordance with the embodiment illustrated in FIGS. 1-7 has a tread 11 defined by intermediate circumferential first shoulder ribs 12, intermediate circumferential second ribs 14, and a center intermediate circumferential third rib 16. The intermediate circumferential ribs 12, 14, 16 are defined by two stabilizing circumferential grooves 22 and two central circumferential grooves 24. The two central circumferential grooves 24 preferably each have a trapezoidal cross-section with slanted walls and a curved bottom (FIG. 4). The intermediate circumferential second ribs 14 and the center intermediate circumferential third rib 16 preferably have wavy blind sipes 15, 17, respectively, for improving performance of the tread 11.

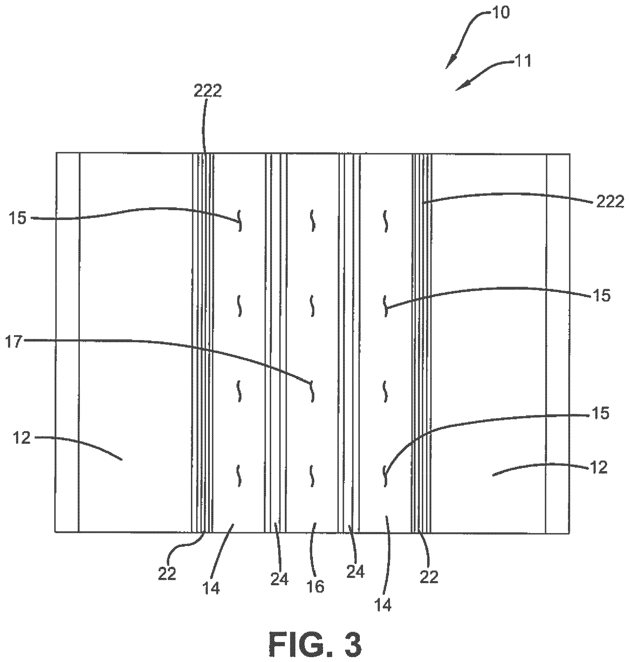

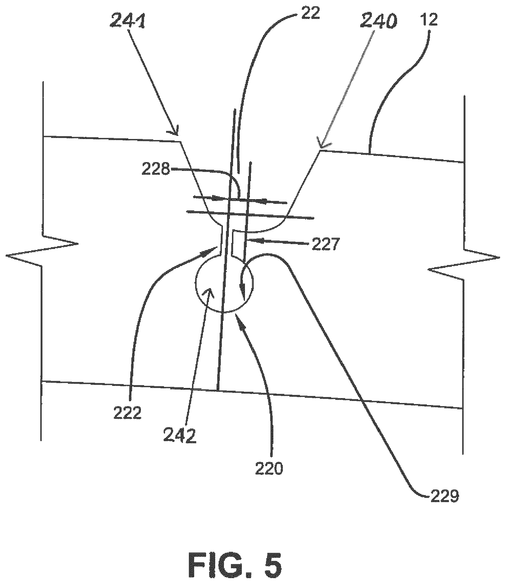

The two stabilizing circumferential grooves 22 preferably also have a trapezoidal cross-section with slanted walls and a curved bottom, similar to the two central circumferential grooves 24. The radial depth of each stabilizing groove 22 may be more shallow (FIG. 4) or less (not shown) than the depth of the central circumferential grooves 24. The stabilizing groove depths are preferably 50% or in a range of from 40% to 60% of the central groove depths (FIG. 4). At the curved bottom of each stabilizing groove 22 is a stabilizing structure 220. The stabilizing structures 220 defines circumferentially extending, preferably linear subgrooves 222 in the bottoms of the stabilizing grooves 22. As shown in FIG. 3, the axial width of the subgrooves 222 is preferably less than the axial width of the bottoms of the stabilizing grooves 22. The subgrooves 222 have curved, cylindrical radially innermost surfaces 229 to mitigate cracking and to increase axial flexibility of the stabilizing structures 222 (FIGS. 5-7).

When an axially inward load is placed on the tread 11, such as while the vehicle is cornering, the axial width of the subgrooves 222 may shrink to as little as 0.0 mm (e.g., touching). Because of the linear pattern of the subgrooves 222, the walls of the subgrooves may frictionally lock thereby preventing relative circumferential movement between the walls of the subgrooves. This may provide an increase in stiffness of the tread 11 while cornering, without requiring increased overall stiffness of the tread during straight line movement of the vehicle.

The subgrooves 222 are axially offset a predetermined amount 228 from a centerline 227 of the grooves 22. The amount 228 of offset may be varied to tune the cornering stiffness of the tread 11. If a subgroove 222 is offset toward the center rib 16 (FIGS. 5-7), the tread 11 around that subgroove may have less cornering stiffness than a subgroove at the centerline 227 of the groove 22. Conversely, if a subgroove 222 is offset away from the center rib 16 (not shown), the tread 11 around that subgroove may have greater cornering stiffness than a subgroove at the centerline 227 of the groove 22. No matter the axial position relative to the centerline 227 of the groove 22, the stabilizing structure 220 may mitigate cracking and increase axial flexibility of the tread 11 during non-cornering, straight line motion and rotation of the tire 10.

In accordance with a preferred embodiment of the present invention and as shown in FIGS. 4-7, the asymmetric first left-hand shoulder groove 22 has a radially angled inner sidewall 161 with a first sidewall radial angle between 170° and 180°, or 175° and a radially angled outer sidewall 162 with a second sidewall radial angle between 155° and 170°, or 161 °. This angle is the respective larger angle the equatorial plane of the tread 11 or tire makes with the respective angled sidewall 161, 162. The respective smaller angle the equatorial plane of the tread 11 or tire makes with the respective angled sidewall is the complementary angle to this larger angle and thus for instance 5° or 9° respectively.

The first left-hand shoulder groove 22 further has a curved base surface 163 with a radius of curvature ranging from 40.0 mm at its axially inner edge 164 and 20.0 mm at its axially outer edge 165. The curved base surface 163 may have a radius of curvature as low as between 1.5 mm and 4.0 mm, or 2.5 mm, as it extends from edge 164 to edge 165. The first left-hand shoulder groove 22 may further have a stabilizing structure 220 nearer the center of the tread 11 than the centerline of the first left hand shoulder groove (See FIG. 5).

In accordance with a preferred embodiment of the present invention and as shown in FIGS. 4-7, the asymmetric second right-hand shoulder groove 22 has a radially angled inner sidewall 171 with a first sidewall radial angle between 167° and 177°, or 172°, and a radially angled outer sidewall 172 with a second sidewall radial angle between 155° and 170°, or 161°. The second right-hand shoulder groove 22 further has a curved base surface 173 with a radius of curvature ranging from 40.0 mm at its axially inner edge 174 and 8.0 mm at its axially outer edge 175. The curved base surface 173 may have a radius of curvature as low as between 1.5 mm and 4.0 mm, or 1.5 mm, as it extends from edge 174 to edge 175. The second right-hand shoulder groove 22 may still further have a stabilizing structure 220 nearer the center of the tread 11 than the centerline of the second right-hand shoulder groove (FIG. 5).

Hence and in accordance with the invention, a tread 11 for a tire 10 is disclosed wherein the tread 11 comprise a circumferential groove 22 having a radially outermost and axially inner first groove edge 240 and a radially outermost and axially outer second groove edge 241, wherein a centerline 227 or center plane of the circumferential groove 22 extends circumferentially along the circumferential groove 22 and axially in the middle between the first and second groove edge 240, 241. The circumferential groove 22 comprises a stabilizing structure 220 for increasing tread stiffness. The stabilizing structure 220 is axially offset a predetermined amount from the centerline 227 or center plane of the circumferential groove. The circumferential groove 22 has an angled axially inner sidewall 161, 171, an angled axially outer sidewall 162, 172 and a curved base surface 163, 173. The stabilizing structure 220 extends radially inward of the curved base surface 163, 173.

In accordance with the invention, the stabilizing structure 220 comprises a circumferentially extending subgroove 222 or slit in the curved base surface 163, 173 of the circumferential groove 22. The subgroove 222 or slit is axially offset from the centerline 227 or center plane of the circumferential groove 22.

In a preferred embodiment of the invention, the circumferential groove 22 has a maximum axial width and the maximum axial width of the subgroove 222 or slit is in a range of from 3 to 15 percent, preferably 5 to 10 percent, of the maximal axial width of the circumferential groove 22.

In a preferred embodiment of the invention, the circumferential groove 22 has a maximum axial width and the subgroove 222 or slit is in a range of from 5 to 25 percent, preferably 10 to 20 percent, axially offset from the centerline 227 or center plane of the circumferential groove 22.

In a preferred embodiment of the invention, the circumferential groove 22 has a maximum axial width and the subgroove 222 or slit is in a range of from 1 to 5 mm, preferably 2 to 4 mm, axially offset from the centerline 227 or center plane of the circumferential groove 22.

In a preferred embodiment of the invention, the stabilizing structure 220 has the shape of a tie bar with said subgroove 222 or slit dividing said tie bar.

In a preferred embodiment of the invention, the subgroove 22 has a circumferentially extending curved cylindrical radially innermost surface 229.

In accordance with the invention, the subgroove 22 or slit is connected radially downwards to a radially innermost, circumferentially extending structure 242 having a circular cross section.

The cylindrical radially innermost surface 229 or the radially innermost, circumferentially extending structure 242 has an axial width in a range of from 20 to 60 percent, preferably 25 to 50 percent, of the maximal axial width of the circumferential groove 22.

In a preferred embodiment of the invention, the tread 11 has a first circumferential main groove, a second circumferential main groove, a third circumferential main groove and a fourth circumferential main groove, the fourth circumferential main groove being said a circumferential groove 22.

In a preferred embodiment of the invention, the axial width of the subgroove 222 or slit is such that it shrinks to 0.0 mm under a predetermined operating condition of the tread 11 when used on a tire 10.

In a preferred embodiment of the invention, the subgroove 222 has a first sidewall and a second sidewall interconnected by the curved, cylindrical radially innermost surface of the subgroove 222. Optionally, the subgroove 222 is configured such that the first sidewall abuts the second sidewall under a predetermined operating condition of the tread 11 when used on a tire 10 and/or in that a relative motion between the first sidewall and the second sidewall is prevented or hindered by a frictional engagement of the first sidewall and the second sidewall.

In a preferred embodiment of the invention, the curved base surface 163, 173 has a radius of curvature in a range of from 35 mm to 45 mm such as 40 mm at the axially inner edge 164, 174 of the curved base surface 163, 173 and a radius of curvature in a range of from 5 mm to 25 mm such as 20 mm or 8 mm at the axially outer edge 165, 175 of the curved base surface 163, 173. Preferably, the radially innermost bottom of the curved base surface 163, 173 has a radius of curvature in a range of from 1.5 mm to 4.0 mm.

In a preferred embodiment of the invention, the angled axially inner sidewall 161, 171 makes an angle in a range of from 167° to 180° or from 170° to 180° or from 167° to 177°, such as 175°, with the radial direction or the equatorial plane.

In a preferred embodiment of the invention, the angled axially outer sidewall 162, 172 makes an angle in a range of from 155° to 170° such as 161° with the radial direction or the equatorial plane.

Preferably, the angle of the angled axially inner sidewall 161, 171 is greater, more preferably at least 5° or at least 10° greater, than the angle of the angled axially outer sidewall 162, 172.

In a preferred embodiment of the invention, the tread 11 comprises a plurality of circumferential grooves 22 such as two, three, four or five of circumferential grooves 22, and wherein only one, only two, or all of said circumferential grooves comprise said stabilizing structure 220 that is axially offset a predetermined amount from the centerline 227 or center plane of the circumferential groove 22 and comprise an angled axially inner sidewall 161, an angled axially outer sidewall 162, and a curved base surface 163 with the stabilizing structure 220 extending radially inward of the curved base surface 163.

In a preferred embodiment of the invention, the tread 11 comprises a plurality of circumferential grooves 22 such as two, three, four or five of circumferential grooves 22 wherein only the one axially outermost circumferential groove on either side of the equatorial plane of the tread 11 comprises said stabilizing structure 220 that is axially offset a predetermined amount from the centerline 227 or center plane of the circumferential groove 22 and comprises an angled axially inner sidewall 161, an angled axially outer sidewall 162, and a curved base surface 163 with the stabilizing structure 220 extending radially inward of the curved base surface 163.

In a preferred embodiment of the invention, the tread 11 comprises a plurality of circumferential grooves 22 such as two, three, four or five of circumferential grooves 22 wherein only the one axially innermost circumferential groove on either side of the equatorial plane of the tread 11 comprises said stabilizing structure 220 that is axially offset a predetermined amount from the centerline 227 or center plane of the circumferential groove 22 and comprises an angled axially inner sidewall 161, an angled axially outer sidewall 162, and a curved base surface 163 with the stabilizing structure 220 extending radially inward of the curved base surface 163.

In a preferred embodiment of the invention, the tread 11 comprises a plurality of circumferential grooves 22 such as two, three, four or five of circumferential grooves 22 wherein only the one circumferential groove that is located axially closest to the outboard side of the vehicle when the tread 11 is used on a vehicle in accordance with the tread's or tire's specification comprises said stabilizing structure 220 that is axially offset a predetermined amount from the centerline 227 or center plane of the circumferential groove 22 and comprises an angled axially inner sidewall 161, an angled axially outer sidewall 162, and a curved base surface 163 with the stabilizing structure 220 extending radially inward of the curved base surface 163.

In a preferred embodiment of the invention, the tread 11 comprises a plurality of circumferential grooves 22 such as two, three, four or five of circumferential grooves 22, wherein only the one circumferential groove that is located axially closest to the inboard side of the vehicle when the tread 11 is used on a vehicle in accordance with the tread's or tire's specification comprises said stabilizing structure 220 that is axially offset a predetermined amount from the centerline 227 or center plane of the circumferential groove 22 and comprises an angled axially inner sidewall 161, an angled axially outer sidewall 162, and a curved base surface 163 with the stabilizing structure 220 extending radially inward of the curved base surface 163.

In a preferred embodiment of the invention, the tread 11 as described in any of the embodiments above is used with a pneumatic tire, preferably a pneumatic truck tire.

## Claims

1. A tread for a tire (10), the tread (11) comprising a circumferential groove (22) having a radially outermost and axially inner first groove edge (240) and a radially outermost and axially outer second groove edge (241), wherein a centerline (227) or center plane of the circumferential groove (22) extends circumferentially along the circumferential groove (22) and axially in the middle between the first and second groove edge (240, 241), the circumferential groove (22) comprising a stabilizing structure (220) for increasing tread stiffness, wherein the stabilizing structure (220) is axially offset a predetermined amount from the centerline (227) or center plane of the circumferential groove (22) and wherein the circumferential groove (22) has an angled axially inner sidewall (161, 171), an angled axially outer sidewall (162, 172), and a curved base surface (163, 173), the stabilizing structure (220) extending radially inward of the curved base surface (163, 173) and comprising a circumferentially extending subgroove (222) or slit in the curved base surface (163, 173) of the circumferential groove (22), the subgroove (222) or slit being axially offset from the centerline (227) or center plane of the circumferential groove (22), **characterized in that** the subgroove (22) or slit is connected radially downwards to a radially innermost, circumferentially extending structure (242) having a circular cross section and having an axial width in a range of from 20 to 60 percent of the maximal axial width of the circumferential groove (22).

2. The tread of claim 1 wherein the maximum axial width of the subgroove (222) or slit is in a range of from 3 to 15 percent, preferably 5 to 10 percent, of the maximal axial width of the circumferential groove (22).

3. The tread of claim 1 or 2 wherein the subgroove (222) or slit is in a range of from 5 to 25 percent, preferably 10 to 20 percent, axially offset from the centerline (227) or center plane of the circumferential groove (22).

4. The tread of at least one of the claims 1 to 3 wherein the subgroove (222) or slit is in a range of from 1 to 5 mm, preferably 2 to 4 mm, axially offset from the centerline (227) or center plane of the circumferential groove (22).

5. The tread of at least one of the claims 1 to 4 wherein the stabilizing structure (220) has the shape of a tie bar with said subgroove (222) or slit dividing said tie bar.

6. The tread of claim 1 wherein the the radially innermost, circumferentially extending structure (242) has an axial width in a range of from 25 to 50 percent of the maximal axial width of the circumferential groove (22).

7. The tread of at least one of the previous claims wherein the tread (11) has a first circumferential main groove, a second circumferential main groove, a third circumferential main groove and a fourth circumferential main groove, the fourth circumferential main groove being said a circumferential groove (22).

8. The tread of at least one of the previous claims wherein the axial width of the subgroove (222) or slit is such that it shrinks to 0.0 mm under a predetermined operating condition of the tread (11) when used on a tire (10).

9. The tread of at least one of the previous claims wherein the curved base surface (163, 173) has a radius of curvature in a range of from 35 mm to 45 mm such as 40 mm at the axially inner edge (164, 174) of the curved base surface (163, 173) and a radius of curvature in a range of from 5 mm to 25 mm such as 20 mm or 8 mm at the axially outer edge (165, 175) of the curved base surface (163, 173); and/or wherein the radially innermost bottom of the curved base surface (163, 173) has a radius of curvature in a range of from 1.5 mm to 4.0 mm.

10. The tread of at least one of the previous claims wherein the angled axially inner sidewall (161, 171) makes an angle in a range of from 167° to 180° or from 170° to 180° or from 167° to 177° with the radial direction or the equatorial plane; and/or wherein the angled axially outer sidewall (162, 172) makes an angle in a range of from 155° to 170° with the radial direction or the equatorial plane.

11. The tread of at least one of the previous claims wherein the tread (11) comprises a plurality of circumferential grooves (22) such as two, three, four or five of circumferential grooves (22), and wherein only one, only two, or all of said circumferential grooves comprise said stabilizing structure (220) that is axially offset a predetermined amount from the centerline (227) or center plane of the circumferential groove (22) and comprise an angled axially inner sidewall (161, 171), an angled axially outer sidewall (162, 172), and a curved base surface (163, 173) with the stabilizing structure (220) extending radially inward of the curved base surface (163, 173).

12. The tread of at least one of the previous claims wherein the tread (11) comprises a plurality of circumferential grooves (22) such as two, three, four or five of circumferential grooves (22), and wherein:
(i) only the one axially outermost circumferential groove on either side of the equatorial plane of the tread (11) comprises said stabilizing structure (220) that is axially offset a predetermined amount from the centerline (227) or center plane of the circumferential groove (22) and comprises an angled axially inner sidewall (161, 171), an angled axially outer sidewall (162, 172), and a curved base surface (163, 173) with the stabilizing structure (220) extending radially inward of the curved base surface (163, 173); or
(ii) only the one axially innermost circumferential groove on either side of the equatorial plane of the tread (11) comprises said stabilizing structure (220) that is axially offset a predetermined amount from the centerline (227) or center plane of the circumferential groove (22) and comprises an angled axially inner sidewall (161, 171), an angled axially outer sidewall (162, 172), and a curved base surface (163, 173) with the stabilizing structure (220) extending radially inward of the curved base surface (163, 173); or
(iii) only the one circumferential groove that is located axially closest to the outboard side of the vehicle when the tread (11) is used on a vehicle in accordance with the tread's or tire's specification comprises said stabilizing structure (220) that is axially offset a predetermined amount from the centerline (227) or center plane of the circumferential groove (22) and comprises an angled axially inner sidewall (161, 171), an angled axially outer sidewall (162, 172), and a curved base surface (163, 173) with the stabilizing structure (220) extending radially inward of the curved base surface (163, 173); or
(iv) only the one circumferential groove that is located axially closest to the inboard side of the vehicle when the tread (11) is used on a vehicle in accordance with the tread's or tire's specification comprises said stabilizing structure (220) that is axially offset a predetermined amount from the centerline (227) or center plane of the circumferential groove (22) and comprises an angled axially inner sidewall (161, 171), an angled axially outer sidewall (162, 172), and a curved base surface (163, 173) with the stabilizing structure (220) extending radially inward of the curved base surface (163, 173).

13. A tire, preferably a pneumatic tire, having a tread in accordance with at least one of the previous claims.

## Patentansprüche

1. Lauffläche für einen Reifen (10), wobei die Lauffläche (11) eine Umfangsrille (22) umfasst, die eine radial äußerste und axial innere erste Rillenkante (240) und eine radial äußerste und axial äußere zweite Rillenkante (241) aufweist, wobei eine Mittellinie (227) oder eine Mittelebene der Umfangsrille (22) sich in Umfangsrichtung entlang der Umfangsrille (22) und axial in der Mitte zwischen der ersten und der zweiten Rillenkante (240, 241) erstreckt, wobei die Umfangsrille (22) eine stabilisierende Struktur (220) zur Erhöhung der Laufflächensteifigkeit umfasst, wobei die stabilisierende Struktur (220) axial um einen vorbestimmten Betrag von der Mittellinie (227) oder der Mittelebene der Umfangsrille (22) versetzt ist und wobei die Umfangsrille (22) eine abgewinkelte axial innere Seitenwand (161, 171), eine abgewinkelte axial äußere Seitenwand (162, 172) und eine gekrümmte Grundfläche (163, 173) aufweist, wobei die stabilisierende Struktur (220) sich von der gekrümmten Grundfläche (163, 173) radial nach innen erstreckt und eine sich in Umfangsrichtung erstreckende Nebenrille (222) oder einen Schlitz in der gekrümmten Grundfläche (163, 173) der Umfangsrille (22) umfasst, wobei die Nebenrille (222) oder der Schlitz axial von der Mittellinie (227) oder der Mittelebene der Umfangsrille (22) versetzt ist, **dadurch gekennzeichnet, dass** die Nebenrille (22) oder der Schlitz radial nach unten mit einer radial innersten, sich in Umfangsrichtung erstreckenden Struktur (242) verbunden ist, die einen kreisförmigen Querschnitt hat und eine axiale Breite in einem Bereich von 20 bis 60 Prozent der maximalen axialen Breite der Umfangsrille (22) hat.

2. Lauffläche nach Anspruch 1, wobei die maximale axiale Breite der Nebenrille (222) oder des Schlitzes in einem Bereich von 3 bis 15 Prozent, vorzugsweise 5 bis 10 Prozent, der maximalen axialen Breite der Umfangsrille (22) liegt.

3. Lauffläche nach Anspruch 1 oder 2, wobei die Nebenrille (222) oder der Schlitz in einem Bereich von 5 bis 25 Prozent, vorzugsweise 10 bis 20 Prozent, axial von der Mittellinie (227) oder der Mittelebene der Umfangsrille (22) versetzt ist.

4. Lauffläche nach mindestens einem der Ansprüche 1 bis 3, wobei die Nebenrille (222) oder der Schlitz in einem Bereich von 1 bis 5 mm, vorzugsweise 2 bis 4 mm, axial von der Mittellinie (227) oder der Mittelebene der Umfangsrille (22) versetzt ist.

5. Lauffläche nach mindestens einem der Ansprüche 1 bis 4, wobei die stabilisierende Struktur (220) die Form eines Profilstegs hat, wobei die oben genannte Nebenrille (222) oder der oben genannte Schlitz den Profilsteg unterteilt.

6. Lauffläche nach Anspruch 1, wobei die radial innerste, sich in Umfangsrichtung erstreckende Struktur (242) eine axiale Breite in einem Bereich von 25 bis 50 Prozent der maximalen axialen Breite der Umfangsrille (22) aufweist.

7. Lauffläche nach mindestens einem der vorhergehenden Ansprüche, wobei die Lauffläche (11) eine erste Umfangshauptrille, eine zweite Umfangshauptrille, eine dritte Umfangshauptrille und eine vierte Umfangshauptrille aufweist, wobei es sich bei der vierten Umfangshauptrille um die oben genannte eine Umfangsrille (22) handelt.

8. Lauffläche nach mindestens einem der vorhergehenden Ansprüche, wobei die axiale Breite der Nebenrille (222) oder des Schlitzes so beschaffen ist, dass sie unter einer vorbestimmten Betriebsbedingung der Lauffläche (11) bei Verwendung dieser auf einem Reifen (10) auf 0,0 mm schrumpft.

9. Lauffläche nach mindestens einem der vorhergehenden Ansprüche, wobei die gekrümmte Grundfläche (163, 173) einen Krümmungsradius in einem Bereich von 35 mm bis 45 mm, wie 40 mm, an der axial inneren Kante (164, 174) der gekrümmten Grundfläche (163, 173) und einen Krümmungsradius in einem Bereich von 5 mm bis 25 mm, wie 20 mm oder 8 mm, an der axial äußeren Kante (165, 175) der gekrümmten Grundfläche (163, 173) aufweist; und/oder wobei der radial innerste Boden der gekrümmten Grundfläche (163, 173) einen Krümmungsradius in einem Bereich von 1,5 mm bis 4,0 mm aufweist.

10. Lauffläche nach mindestens einem der vorhergehenden Ansprüche, wobei die abgewinkelte axial innere Seitenwand (161, 171) einen Winkel in einem Bereich von 167° bis 180° oder von 170° bis 180° oder von 167° bis 177° mit der Radialrichtung oder mit der Äquatorialebene bildet; und/oder wobei die abgewinkelte axial äußere Seitenwand (162, 172) einen Winkel in einem Bereich von 155° bis 170° mit der Radialrichtung oder mit der Äquatorialebene bildet.

11. Lauffläche nach mindestens einem der vorhergehenden Ansprüche, wobei die Lauffläche (11) eine Vielzahl von Umfangsrillen (22), wie beispielsweise zwei, drei, vier oder fünf Umfangsrillen (22), umfasst, und wobei nur eine, nur zwei, oder alle der oben genannten Umfangsrillen die stabilisierende Struktur (220), die um einen vorbestimmten Betrag axial von der Mittellinie (227) oder der Mittelebene der Umfangsrille (22) versetzt ist, umfassen und eine abgewinkelte axial innere Seitenwand (161, 171), eine abgewinkelte axial äußere Seitenwand (162, 172) und eine gekrümmte Grundfläche (163, 173) umfassen, wobei die stabilisierende Struktur (220) sich radial nach innen von der gekrümmten Grundfläche (163, 173) erstreckt.

12. Lauffläche nach mindestens einem der vorhergehenden Ansprüche, wobei die Lauffläche (11) eine Vielzahl von Umfangsrillen (22), wie zwei, drei, vier oder fünf Umfangsrillen (22), umfasst, und wobei:
(i) nur die eine axial äußerste Umfangsrille auf beiden Seiten der Äquatorialebene der Lauffläche (11) die oben genannte stabilisierende Struktur (220), die um einen vorbestimmten Betrag axial von der Mittellinie (227) oder der Mittelebene der Umfangsrille (22) versetzt ist, umfasst und eine abgewinkelte axial innere Seitenwand (161, 171), eine abgewinkelte axial äußere Seitenwand (162, 172) und eine gekrümmte Grundfläche (163, 173) umfasst, wobei die stabilisierende Struktur (220) sich radial nach innen von der gekrümmten Grundfläche (163, 173) erstreckt; oder
(ii) nur die eine axial innerste Umfangsrille auf beiden Seiten der Äquatorialebene der Lauffläche (11) die oben genannte stabilisierende Struktur (220), die um einen vorbestimmten Betrag axial von der Mittellinie (227) oder der Mittelebene der Umfangsrille (22) versetzt ist, umfasst und eine abgewinkelte axial innere Seitenwand (161, 171), eine abgewinkelte axial äußere Seitenwand (162, 172) und eine gekrümmte Grundfläche (163, 173) umfasst, wobei die stabilisierende Struktur (220) sich radial nach innen von der gekrümmten Grundfläche (163, 173) erstreckt; oder
(iii) nur die eine Umfangsrille, die sich axial am nächsten an der Außenseite des Fahrzeugs befindet, wenn die Lauffläche (11) gemäß der Spezifikation der Lauffläche oder des Reifens an einem Fahrzeug verwendet wird, die oben genannte stabilisierende Struktur (220), die um einen vorbestimmten Betrag axial von der Mittellinie (227) oder der Mittelebene der Umfangsrille (22) versetzt ist, umfasst und eine abgewinkelte axial innere Seitenwand (161, 171), eine abgewinkelte axial äußere Seitenwand (162, 172) und eine gekrümmte Grundfläche (163, 173) umfasst, wobei die stabilisierende Struktur (220) sich radial nach innen von der gekrümmten Grundfläche (163, 173) erstreckt; oder
(iv) nur die eine Umfangsrille, die sich axial am nächsten an der Innenseite des Fahrzeugs befindet, wenn die Lauffläche (11) gemäß der Spezifikation der Lauffläche oder des Reifens an einem Fahrzeug verwendet wird, die oben genannte stabilisierende Struktur (220), die um einen vorbestimmten Betrag axial von der Mittellinie (227) oder der Mittelebene der Umfangsrille (22) versetzt ist, umfasst und eine abgewinkelte axial innere Seitenwand (161, 171), eine abgewinkelte axial äußere Seitenwand (162, 172) und eine gekrümmte Grundfläche (163, 173) umfasst, wobei die stabilisierende Struktur (220) sich radial nach innen von der gekrümmten Grundfläche (163, 173) erstreckt.

13. Reifen, vorzugsweise ein Luftreifen, der eine Lauffläche nach mindestens einem der vorhergehenden Ansprüche aufweist.

## Revendications

1. Bande de roulement pour un bandage pneumatique (10), la bande de roulement (11) comprenant une rainure circonférentielle (22) qui possède un premier bord de rainure (240) le plus à l'extérieur dans la direction radiale et interne dans la direction axiale et un deuxième bord de rainure (241) le plus à l'extérieur dans la direction radiale et externe dans la direction axiale ; dans laquelle une ligne centrale (227) ou un plan central de la rainure circonférentielle (22) s'étend dans la direction circonférentielle le long de la rainure circonférentielle (22) et, dans la direction axiale, au milieu entre le premier et le deuxième bord de rainure (240, 241), la rainure circonférentielle (22) comprenant une structure stabilisation (220) destinée à augmenter la rigidité de la bande de roulement ; dans laquelle la structure de stabilisation (220) est décalée, dans la direction axiale, à raison d'une valeur prédéterminée par rapport à la ligne centrale (227) ou au plan central de la rainure circonférentielle (22) ; et dans laquelle le rainure circonférentielle (22) possède un flanc interne (161, 171) qui forme un angle dans la direction axiale, un flanc externe (162, 172) qui forme un angle dans la direction axiale, et une surface de base de forme courbe (163, 173), la structure de stabilisation (220) s'étendant, dans la direction radiale, du côté interne de la surface de base de forme courbe (163, 173) et comprenant une rainure secondaire (222) ou une fente qui s'étend dans la direction circonférentielle, pratiquée dans la surface de base de forme courbe (163,173) de la rainure circonférentielle (22), la rainure secondaire (222) ou la fente étant décalée, dans la direction axiale, par rapport à la ligne centrale (227) ou au plan central de la rainure circonférentielle (22), **caractérisée en ce que** la rainure secondaire (22) ou la fente est reliée, dans la direction radiale, vers le bas, à une structure (242) la plus à l'intérieur dans la direction radiale, s'étendant dans la direction circonférentielle, qui possède une section transversale circulaire et qui présente une largeur axiale qui représente une valeur qui se situe dans une plage allant de 20 à 60 pour cent de la largeur axiale maximale de la rainure circonférentielle (22).

2. Bande de roulement selon la revendication 1, dans laquelle la largeur axiale maximale de la rainure secondaire (222) ou de la fente représente une valeur qui se situe dans une plage allant de 3 à 15 pour cent, de préférence 5 à 10 pour cent de la largeur axiale maximale de la rainure circonférentielle (22).

3. Bande de roulement selon la revendication 1 ou 2, dans laquelle la rainure secondaire (222) ou la fente est décalée, dans la direction axiale, à raison d'une valeur qui se situe dans une plage allant de 5 à 25 pour cent, de préférence de 10 à 20 pour cent, par rapport à la ligne centrale (227) ou au plan central de la rainure circonférentielle (22).

4. Bande de roulement selon au moins une des revendications 1 à 3, dans laquelle la rainure secondaire (222) ou la fente est décalée, dans la direction axiale, à raison d'une valeur qui se situe dans une plage allant de 1 à 5 mm, de préférence de 2 à 4 mm, par rapport à la ligne centrale (227) ou au plan central de la rainure circonférentielle (22).

5. Bande de roulement selon au moins une des revendications 1 à 4, dans laquelle la structure de stabilisation (220) possède la configuration d'un pont de gomme, ladite rainure secondaire (222) ou la fente divisant ledit pont de gomme.

6. Bande de roulement selon la revendication 1, dans laquelle la structure (242) la plus à l'intérieur dans la direction radiale, qui s'étend dans la direction circonférentielle possède une largeur axiale qui représente une valeur qui se situe dans une plage allant de 25 à 50 pour cent de la largeur axiale maximale de la rainure circonférentielle (22).

7. Bande de roulement selon au moins une des revendications précédentes, dans laquelle la bande de roulement (11) possède une première rainure principale circonférentielle, une deuxième rainure principale circonférentielle, une troisième rainure principale circonférentielle et une quatrième rainure principale circonférentielle, le quatrième rainure principale circonférentielle représentant ladite une rainure circonférentielle (22).

8. Bande de roulement selon au moins une des revendications précédentes, dans laquelle la largeur axiale de la rainure secondaire (222) ou de la fente est telle qu'elle se réduit jusqu'à 0,0 mm dans une condition de mise en service prédéterminée de la bande de roulement (11) lorsqu'on utilise cette dernière sur un bandage pneumatique (10).

9. Bande de roulement selon au moins une des revendications précédentes, dans laquelle la surface de base de forme courbe (163, 173), possède un rayon de courbure qui se situe dans une plage allant de 35 à 45 mm, par exemple qui s'élève à 40 mm au bord interne (164, 174), dans la direction axiale, de la surface de base de forme courbe (163, 173) et un rayon de courbure qui se situe dans une plage allant de 5 mm à 25 mm, par exemple qui s'élève à 1 mm ou à 8 mm au bord externe (165, 175), dans la direction axiale, de la surface de base de forme courbe (163, 173) ; et/ou dans lequel la base la plus à l'intérieur, dans la direction radiale, de la surface de base de forme courbe (163, 173) possède un rayon de courbure qui se situe dans une plage allant de 1,5 mm à 4,0 mm.

10. Bande de roulement selon au moins une des revendications précédentes, dans laquelle le flanc interne (161, 171) qui forme un angle dans la direction axiale, forme un angle qui se situe dans une plage allant de 160° à 180° ou de 170° à 180° ou de 167° à 177° avec la direction radiale ou le plan équatorial ; et/ou dans lequel le flanc externe (162, 172) qui forme un angle dans la direction axiale, forme un angle qui se situe dans une plage allant de 155° à 170° avec la direction radiale ou le plan équatorial.

11. Bande de roulement selon au moins une des revendications précédentes, dans laquelle la bande de roulement (11) comprend un certain nombre de rainures circonférentielles (22), comme par exemple deux, trois, quatre ou cinq rainures circonférentielles (22) ; et dans laquelle seulement une, seulement deux ou la totalité desdites rainures circonférentielles comprend/comprennent ladite structure de stabilisation (220) qui est décalée, dans la direction axiale, à raison d'une valeur prédéterminée par rapport à la ligne centrale (227) ou au plan central de la rainure circonférentielle (22) ; et comprend/comprennent un flanc interne (161, 171) qui forme un angle dans la direction axiale, un flanc externe (162, 172) qui forme un angle dans la direction axiale, et une surface de base de forme courbe (163, 173), la structure de stabilisation (220) s'étendant, dans la direction radiale, du côté interne de la surface de base de forme courbe (163, 173).

12. Bande de roulement selon au moins une des revendications précédentes, dans laquelle la bande de roulement (11) comprend un certain nombre de rainures circonférentielles (22), comme par exemple deux, trois, quatre ou cinq rainures circonférentielles (22) ; et dans laquelle :
(i) seulement ladite une rainure circonférentielle le plus à l'extérieur dans la direction axiale de part et d'autre du plan équatorial de la bande de roulement (11) comprend ladite structure de stabilisation (220) qui est décalée, dans la direction axiale, à raison d'une valeur prédéterminée par rapport à la ligne centrale (227) ou au plan central de la rainure circonférentielle (22) ; et comprend un flanc interne (161, 171) qui forme un angle dans la direction axiale, un flanc externe (162, 172) qui forme un angle dans la direction axiale, et une surface de base de forme courbe (163, 173), la structure de stabilisation (220) s'étendant, dans la direction radiale, du côté interne de la surface de base de forme courbe (163, 173) ; ou
(ii) seulement ladite une rainure circonférentielle le plus à l'intérieur dans la direction axiale de part et d'autre du plan équatorial de la bande de roulement (11) comprend ladite structure de stabilisation (220) qui est décalée, dans la direction axiale, à raison d'une valeur prédéterminée par rapport à la ligne centrale (227) ou au plan central de la rainure circonférentielle (22) ; et comprend un flanc interne (161, 171) qui forme un angle dans la direction axiale, un flanc externe (162, 172) qui forme un angle dans la direction axiale, et une surface de base de forme courbe (163, 173), la structure de stabilisation (220) s'étendant, dans la direction radiale, du côté interne de la surface de base de forme courbe (163, 173) ; ou
(iii) seulement ladite une rainure circonférentielle qui est située le plus près, dans la direction axiale, du côté externe du véhicule lorsque la bande de roulement (11) est utilisé sur un véhicule en conformité avec la spécification de la bande de roulement ou du bandage pneumatique comprend ladite structure de stabilisation (220) qui est décalée, dans la direction axiale, à raison d'une valeur prédéterminée par rapport à la ligne centrale (227) ou au plan central de la rainure circonférentielle (22) ; et comprend un flanc interne (161, 171) qui forme un angle dans la direction axiale, un flanc externe (162, 172) qui forme un angle dans la direction axiale, et une surface de base de forme courbe (163, 173), la structure de stabilisation (220) s'étendant, dans la direction radiale, du côté interne de la surface de base de forme courbe (163, 173) ; ou
(iv) seulement ladite une rainure circonférentielle qui est située le plus près, dans la direction axiale, du côté interne du véhicule lorsque la bande de roulement (11) est utilisé sur un véhicule en conformité avec la spécification de la bande de roulement ou du bandage pneumatique comprend ladite structure de stabilisation (220) qui est décalée, dans la direction axiale, à raison d'une valeur prédéterminée par rapport à la ligne centrale (227) ou au plan central de la rainure circonférentielle (22) ; et comprend un flanc interne (161, 171) qui forme un angle dans la direction axiale, un flanc externe (162, 172) qui forme un angle dans la direction axiale, et une surface de base de forme courbe (163, 173), la structure de stabilisation (220) s'étendant, dans la direction radiale, du côté interne de la surface de base de forme courbe (163, 173).

13. Bandage pneumatique, de préférence un bandage pneumatique proprement dit, possédant une bande de roulement en conformité avec au moins une des revendications précédentes.
